# EUROPÄISCHE PATENTSCHRIFT

(11) **EP 4 208 379 B1**
(45) Veröffentlichungstag und Bekanntmachung des Hinweises auf die Patenterteilung: **09.10.2024**
(21) Anmeldenummer: 21755736.2
(22) Anmeldetag: 04.08.2021
(51) Int. Cl.: B60W 60/00, B60W 50/00

(54) **VERFAHREN UND VORRICHTUNG ZUM PLANEN EINER ZUKÜNFTIGEN TRAJEKTORIE EINES AUTOMATISIERT ODER TEILAUTOMATISIERT FAHRENDEN FAHRZEUGS**
METHOD AND APPARATUS FOR PLANNING A FUTURE TRAJECTORY OF AN AUTONOMOUSLY OR SEMI-AUTONOMOUSLY DRIVING VEHICLE
PROCÉDÉ ET APPAREIL DE PLANIFICATION D'UNE FUTURE TRAJECTOIRE D'UN VÉHICULE À CONDUITE AUTONOME OU SEMI-AUTONOME

(30) Priorität: 06.09.2020 DE 102020211186
(43) Veröffentlichungstag der Anmeldung: 12.07.2023
(73) Patentinhaber: VOLKSWAGEN AKTIENGESELLSCHAFT, 38440 Wolfsburg (DE)
(72) Erfinder: VAN ENDE, Kristof, 38102 Braunschweig (DE)
(86) Internationale Anmeldenummer: PCT/EP2021/071723
(87) Internationale Veröffentlichungsnummer: WO 2022/048846

(56) Entgegenhaltungen:
- DE-A1- 102014 215 980
- US-A1- 2020 010 095
- US-A1- 2020 026 286
- M. DÜRING, K. FRANKE, R. BALAGHIASEFI, M. GONTER, M. BELKNER AND K. LEMMER: "Adaptive cooperative maneuver planning algorithm for conflict resolution in diverse traffic situations", 2014 INTERNATIONAL CONFERENCE ON CONNECTED VEHICLES AND EXPO (ICCVE), 2014, PP. 242-249,, 15 October 2017 (2017-10-15) - 3 November 2021 (2021-11-03), XP002804677, Retrieved from the Internet <URL:https://ieeexplore.ieee.org/document/7297550> [retrieved on 20211103], DOI: 10.1109/ICCVE.2014.7297550

## Beschreibung

Die Erfindung betrifft ein Verfahren und eine Vorrichtung zum Planen einer zukünftigen Trajektorie eines automatisiert oder teilautomatisiert fahrenden Fahrzeugs. Ferner betrifft die Erfindung ein Fahrzeug.

Zukünftige assistierte und automatische Fahrfunktionen werden immer umfangreicher und müssen immer mehr komplexe Fahrsituationen beherrschen. In einer Vielzahl von komplexen Fahrsituationen ist eine Interaktion mit anderen Verkehrsteilnehmern notwendig, um zum einen sicherheitsrelevante Anforderungen zu erfüllen als auch zum anderen ein menschenähnlicheres Fahrverhalten zu erwirken und somit eine höhere Akzeptanz in der Gesellschaft zu erzielen. Diese zum Teil soziale Interaktion mit den anderen Verkehrsteilnehmern (z.B. Einfädeln auf der Autobahn, Reißverschlussverfahren, Kreisverkehre etc.) ist bisher bei der Manöver- bzw. Trajektorienplanung nur ungenügend berücksichtigt worden.

Bekannte Lösungen zur Manöver- bzw. Trajektorienplanung basieren zumeist darauf, dass anderen Verkehrsteilnehmern Bewegungsmodelle zugordnet werden, die bei der Berechnung einer optimalen Trajektorie berücksichtigt werden. Eine Summe von verursachten Kosten der eigenen Trajektorie und der Trajektorien der anderen Verkehrsteilnehmer führt dann zu einer Entscheidung, welche Trajektorie das Fahrzeug ausführen soll. Dieser Ansatz berücksichtigt einen aktuellen Zustand und sich hieraus ergebene mögliche Kosten.

Eine andere bekannte Lösung basiert auf einem Austausch von Datenpaketen über z.B. Car2X. Hierbei tauschen das Fahrzeug und andere Verkehrsteilnehmer ihre geplanten Trajektorienbündel aus und wählen gemeinsam die jeweiligen Trajektorien aus, die in Summe die geringsten Kosten in einer gemeinsamen Kostenfunktion erzeugen. Dies ermöglicht eine Interaktion zwischen den Fahrzeugen, setzt aber den Einsatz von Car2X in den beteiligten Fahrzeugen voraus und ist daher mit zusätzlichen Kosten verbunden.

Aus der DE 10 2018 109 883 A1 ist ein Verfahren zum kooperativen Abstimmen von zukünftigen Fahrmanövern eines Fahrzeugs mit Fremdmanövern zumindest eines Fremdfahrzeugs bekannt, wobei Trajektorien für das Fahrzeug mit je einem Aufwandswert bewertet werden, Trajektorien und Fremdtrajektorien des Fremdfahrzeugs zu Tupeln kombiniert werden, die Trajektorie und der zugehörige Aufwandswert eines kollisionsfreien Tupels als Bezugstrajektorie und Bezugsaufwandswert ausgewählt werden, Trajektorien mit einem niedrigeren Aufwandswert als der Bezugsaufwandswert als Bedarfstrajektorien klassifiziert werden, Trajektorien mit einem höheren Aufwandswert als der Bezugsaufwandswert als Alternativtrajektorien klassifiziert werden und ein Datenpaket mit einer Trajektorienschar aus der Bezugstrajektorie und dem zugehörigen Bezugsaufwandswert sowie zumindest einer Trajektorie aus einer Gruppe umfassend die Bedarfstrajektorien und die Alternativtrajektorien sowie die entsprechenden Aufwandswerte an das Fremdfahrzeug gesendet wird.

Aus M. Düring et al., Adaptive Cooperative Maneuver Planning Algorithm for Conflict Resolution in Diverse Traffic Situations, 2014 International Conference on Connected Vehicles and Expo (ICCVE), IEEE, 2014, ist ein Verfahren zur kooperativen Manöverplanung bekannt, bei dem eine Kostenfunktion gegenseitige Kosten von Fahrzeugen berücksichtigt.

Aus DE 10 2014 215 980 A1 ist ein Verfahren zum Betreiben einer Fahrassistenzvorrichtung in einem automatischen Fahrmodus bekannt, in welchem die Fahrassistenzvorrichtung selbsttätig eine Längsführung und eine Querführung eines Kraftfahrzeugs durchführt. Es soll ein kooperatives Verhalten gegenüber einem Fremdfahrzeug realisiert werden. Hierzu wird durch die Fahrassistenzvorrichtung ein bevorstehender Spurwechsel des auf einer Nachbarfahrspur fahrenden Fremdfahrzeugs auf die Eigenfahrspur des Kraftfahrzeugs erkannt und eine sich zwischen dem Fremdfahrzeug und dem Kraftfahrzeug nach dem Spurwechsel voraussichtlich ergebenden Zeitlücke ermittelt. Falls die ermittelte Zeitlücke kleiner als eine vorbestimmte Mindestzeitlücke ist, wird auf der Eigenfahrspur mit dem Kraftfahrzeug ein Längsführungsmanöver durchgeführt, welches dazu ausgelegt ist, die sich voraussichtlich ergebende Zeitlücke auf die Mindestzeitlücke zu vergrößern.

Der Erfindung liegt die Aufgabe zu Grunde, ein Verfahren und eine Vorrichtung zum Planen einer zukünftigen Trajektorie eines automatisiert oder teilautomatisiert fahrenden Fahrzeugs zu schaffen, bei der eine soziale Interaktion verbessert berücksichtigt werden kann.

Die Aufgabe wird erfindungsgemäß durch ein Verfahren mit den Merkmalen des Patentanspruchs 1 und eine Vorrichtung mit den Merkmalen des Patentanspruchs 8 gelöst. Vorteilhafte Ausgestaltungen der Erfindung ergeben sich aus den Unteransprüchen.

Insbesondere wird ein Verfahren zum Planen einer zukünftigen Trajektorie eines automatisiert oder teilautomatisiert fahrenden Fahrzeugs zur Verfügung gestellt, wobei Sensordaten mittels mindestens eines Sensors des Fahrzeugs erfasst werden, wobei mittels einer Trajektorienplanungseinrichtung für einen aus den erfassten Sensordaten abgeleiteten Umfeldzustand eine optimale Trajektorie für das Fahrzeug bestimmt wird, wobei hierzu mögliche zukünftige Trajektorien des Fahrzeugs erzeugt und mittels einer Belohnungsfunktion bewertet werden, wobei hierbei ein Verhalten des Fahrzeugs, ein statisches Umfeld und ein Verhalten anderer Verkehrsteilnehmer berücksichtigt wird, wobei in der Belohnungsfunktion zusätzlich auch ein durch das Verhalten des Fahrzeugs auf die anderen Verkehrsteilnehmer ausgeübter Einfluss berücksichtigt wird, und wobei die bestimmte optimale Trajektorie zur Ausführung bereitgestellt wird.

Ferner wird insbesondere eine Vorrichtung zum Planen einer zukünftigen Trajektorie eines automatisiert oder teilautomatisiert fahrenden Fahrzeugs geschaffen, umfassend eine Trajektorienplanungseinrichtung, wobei die Trajektorienplanungseinrichtung dazu eingerichtet ist, für einen Umfeldzustand, der aus mittels mindestens eines Sensors des Fahrzeugs erfassten Sensordaten abgeleitet wurde, eine optimale Trajektorie für das Fahrzeug zu bestimmen, und hierzu mögliche zukünftige Trajektorien des Fahrzeugs zu erzeugen und mittels einer Belohnungsfunktion zu bewerten, wobei hierbei ein Verhalten des Fahrzeugs, ein statisches Umfeld und ein Verhalten anderer Verkehrsteilnehmer berücksichtigt wird, wobei in der Belohnungsfunktion zusätzlich auch ein durch das Verhalten des Fahrzeugs auf die anderen Verkehrsteilnehmer ausgeübter Einfluss berücksichtigt wird, und die bestimmte optimale Trajektorie zur Ausführung bereitzustellen.

Das Verfahren und die Vorrichtung ermöglichen es, eine optimale Trajektorie zu bestimmen und hierbei eine verbesserte Interaktion mit anderen Verkehrsteilnehmern zu erreichen, ohne dass hierfür eine direkte Kommunikation mit den anderen Verkehrsteilnehmern und ein Austausch von geplanten Trajektorien erfolgen muss. Dies wird erreicht, indem in einer bei der Trajektorienplanung verwendeten Belohnungsfunktion (welche in umgekehrter Ausprägung auch als Kostenfunktion bezeichnet bzw. verwendet werden kann) zusätzlich auch ein durch das Verhalten des Fahrzeugs auf die anderen Verkehrsteilnehmer ausgeübter Einfluss berücksichtigt wird. Beispielsweise kann mindestens ein zusätzlicher Term in der Belohnungsfunktion vorgesehen sein, über den der Einfluss auf die anderen Verkehrsteilnehmer berücksichtigt wird. Insbesondere wird der Einfluss auf die anderen Verkehrsteilnehmer dadurch bestimmt, dass eine Vielzahl alternativer Trajektorien erzeugt wird und ein Verhalten der anderen Verkehrsteilnehmer als jeweilige Reaktion auf diese Trajektorien geschätzt und bewertet wird. Die jeweilige Bewertung kann als Maß dafür angesehen werden, wie hoch die Kosten (bzw. die Belohnungen) für die jeweils anderen Verkehrsteilnehmer bei Durchführen der Reaktionen auf die alternativen Trajektorien des Fahrzeugs ausfallen. Sind für eine beispielhaft betrachtete Trajektorie des Fahrzeug die Kosten der Reaktionen für andere Verkehrsteilnehmer auf zur betrachteten Trajektorie alternative Trajektorien im Vergleich zu der betrachteten Trajektorie hoch, so ist die betrachtete Trajektorie vorteilhaft, da diese nur einen geringeren (oder gar keinen) Einfluss auf das Verhalten der anderen Verkehrsteilnehmer hat. Daher würde die betrachtete Trajektorie aufgrund der Vorteilhaftigkeit für die anderen Verkehrsteilnehmer einen höheren Wert in der Belohnungsfunktion (bzw. einen niedrigeren in einer analog verwendeten Kostenfunktion) erzielen.

Ein Vorteil des Verfahrens und der Vorrichtung ist, dass eine intrinsische soziale Motivation bei der Planung zukünftiger Trajektorien des Fahrzeugs berücksichtigt werden kann. Insbesondere wird ein kooperatives Verhalten hierdurch ermöglicht, ohne dass eine Kommunikation zwischen dem Fahrzeug und anderen Verkehrsteilnehmern erfolgen muss. Eine Berücksichtigung der Beeinflussung und der Rückwirkungen auf andere Verkehrsteilnehmer in assistierten und automatischen Fahrfunktionen verbessert darüber hinaus das Fahrerlebnis.

Erfindungsgemäß ist vorgesehen, dass mittels einer Situationserkennungseinrichtung mindestens eine Situation in dem abgeleiteten Umfeldzustand und/oder in den erfassten Sensordaten erkannt wird und ein durch das Verhalten des Fahrzeugs auf die anderen Verkehrsteilnehmer ausgeübter Einfluss in Abhängigkeit der mindestens einen erkannten Situation festgelegt ist oder festgelegt wird. Beispielsweise können hierbei die folgenden Situationen unterschieden und erkannt werden: aktives oder passives Auffahren auf eine Autobahn, Einfädeln (z.B. Reißverschlussverfahren), Kreisverkehr, Spurwechsel, urbane Szenarien etc. Situationsabhängig kann dann der Einfluss des Verhaltens des Fahrzeugs auf das Verhalten der anderen Verkehrsteilnehmer angepasst werden. Beispielsweise kann eine Gewichtung des Einflusses, insbesondere in der Belohnungsfunktion, beim Bestimmen der optimalen Trajektorie angepasst werden. Beispielsweise kann die Belohnungsfunktion für das (Multi-Agent) Reinforcement Learning in Abhängigkeit der erkannten Situation verändert werden, beispielsweise indem Gewichtungsfaktoren angepasst werden. Hierdurch kann beispielsweise eine Kooperation mit anderen Verkehrsteilnehmern in der Situation "Einfädeln (Reißverschluss)" bei einer Straßenverengung gegenüber einer Situation "Spurwechsel im mehrspurigen Stadtverkehr" erhöht werden, um ein kooperativeres Verhalten des Fahrzeugs beim Einfädeln zu bewirken.

Die Trajektorienplanungseinrichtung wählt als optimale Trajektorie insbesondere diejenige Trajektorie aus den möglichen Trajektorien aus, die für einen gegebenen Umfeldzustand den höchsten mittels der Belohnungsfunktion bestimmten Wert erreicht.

Ein Umfeldzustand ergibt sich insbesondere aus dem Umfeld des Fahrzeugs. Der Umfeldzustand umfasst insbesondere ein statisches Umfeld und ein Verhalten anderer Verkehrsteilnehmer, das heißt insbesondere ein dynamisches Umfeld. Das Umfeld des Fahrzeugs ist insbesondere in Bezug auf eine Ausdehnung um das Fahrzeug herum beschränkt. Insbesondere kann das Umfeld sowohl im Hinblick auf eine örtliche Ausdehnung als auch eine Anzahl von anderen Verkehrsteilnehmern, die berücksichtigt werden, beschränkt sein.

Teile der Vorrichtung, insbesondere die Trajektorienplanungseinrichtung, können einzeln oder zusammengefasst als eine Kombination von Hardware und Software ausgebildet sein, beispielsweise als Programmcode, der auf einem Mikrocontroller oder Mikroprozessor ausgeführt wird. Es kann jedoch auch vorgesehen sein, dass Teile einzeln oder zusammengefasst als anwendungsspezifische integrierte Schaltung (ASIC) ausgebildet sind.

Es kann alternativ auch vorgesehen sein, anstatt einer Belohnungsfunktion eine Kostenfunktion zu verwenden. Das Verfahren ist dann grundsätzlich analog durchzuführen, wobei die Ausprägung von Belohnung und Kosten entgegengesetzt ist.

In einer Ausführungsform ist vorgesehen, dass ein durch das Verhalten des Fahrzeugs auf die anderen Verkehrsteilnehmer ausgeübter Einfluss mittels einer Schätzeinrichtung geschätzt wird, wobei hierzu mögliche Trajektorien der anderen Verkehrsteilnehmer in Abhängigkeit der möglichen zukünftigen Trajektorien des Fahrzeugs jeweils mittels mindestens eines Verkehrsteilnehmermodells geschätzt und bewertet werden. Hierdurch können mehrere mögliche Verhaltensweisen in Abhängigkeit mehrerer möglicher Trajektorien des Fahrzeugs untersucht und beim Bestimmen der optimalen Trajektorie berücksichtigt werden. Die für die mehreren möglichen Trajektorien erhaltenen Bewertungen fließen insbesondere als Einfluss in die Belohnungsfunktion ein.

In einer Ausführungsform ist vorgesehen, dass die optimale Trajektorie mittels eines Verfahrens des Reinforcement Learning bestimmt wird, wobei die hierbei verwendete Belohnungsfunktion einen Beeinflussungsterm aufweist, der einen Einfluss von Aktionen des Fahrzeugs auf Aktionen der anderen Verkehrsteilnehmer beschreibt. Hierdurch kann das Fahrzeug schrittweise ein Verhalten lernen, bei dem der Einfluss des Verhaltens auf die anderen Verkehrsteilnehmer berücksichtigt wird.

Reinforcement Learning (auch als bestärkendes oder verstärkendes Lernen bezeichnet) ist ein Verfahren des Maschinellen Lernens, bei dem ein Agent selbständig eine Strategie erlernt, um erhaltene Belohnungen zu maximieren. Eine Belohnung kann hierbei sowohl positiv als auch negativ sein. Anhand der erhaltenen Belohnungen approximiert der Agent eine Belohnungsfunktion, die beschreibt, welchen Wert ein Zustand oder eine Aktion hat. Im Zusammenhang mit Aktionen kann ein solcher Wert auch als Aktionswert (engl. action value) bezeichnet werden. Verfahren des Reinforcement Learning betrachten insbesondere eine Interaktion des Agenten mit seinem Umfeld, das in Form eines Markow-Entscheidungsproblems formuliert ist. Der Agent kann ausgehend von einem gegebenen Zustand durch eine aus mehreren Aktionen ausgewählten Aktion in einen anderen Zustand gelangen. In Abhängigkeit der getroffenen Entscheidung, d.h. der ausgeführten Aktion, erhält der Agent eine Belohnung (engl. reward). Der Agent hat hierbei die Aufgabe, einen zukünftig erwarteten Gewinn, der sich aus diskontierten Belohnungen, also der Gesamtbelohnung zusammensetzt, zu maximieren. Am Ende des Verfahrens steht für eine vorgegebene Strategie eine approximierte Belohnungsfunktion, mit der für jede Aktion ein Belohnungswert bzw. Aktionswert bereitgestellt oder geschätzt werden kann.

Eine Aktion kann für ein Fahrzeug beispielsweise die folgenden Handlungen umfassen: Geradeausfahren mit aktiviertem Abstandsregeltempomat (ACC) (d.h. auf der Fahrspur bleiben und keinen Spurwechsel durchführen), Geradeausfahren (keine Beschleunigung), Geradeausfahren und Bremsen, Fahrspurwechsel auf die linke Fahrspur oder Fahrspurwechsel auf die rechte Fahrspur etc.

Eine Belohnung (engl. reward) bzw. ein Aktionswert für eine Aktion im Zustandsraum kann insbesondere die folgenden Einflüsse berücksichtigen: eine Kollisionsvermeidung, eine Pfadtreue (d.h. kein oder nur ein geringes Abweichen von einem von einer Navigationseinrichtung vorgegebenen Pfad), ein zeitoptimales Verhalten und/oder einen Komfort bzw. eine Zweckmäßigkeit für Fahrzeuginsassen. Zusätzlich wird verfahrensgemäß auch der Einfluss der Aktion auf die anderen Verkehrsteilnehmer berücksichtigt.

Insbesondere können mittels des Verfahrens des Reinforcement Learning auf diese Weise die Kriterien, die eine optimale Trajektorie aufweist, einer aktuellen Entwicklung oder Dynamik angepasst werden. Die Belohnungsfunktion weist dann insbesondere einen Term auf, der die Umfeldbelohnung beinhaltet und zumindest einen weiteren Term, den Beeinflussungsterm. In dem Beeinflussungsterm der Belohnungsfunktion wird der Einfluss des Verhaltens des Fahrzeugs auf das Verhalten der anderen Verkehrsteilnehmer berücksichtigt. Beispielsweise kann vorgesehen sein, dass ein über den Beeinflussungsterm berücksichtigter Anteil der Belohnung umso größer ist, je geringer ein Einfluss auf die anderen Verkehrsteilnehmer für eine betrachtete Trajektorie bzw. eine betrachtete Aktion ist. Umgekehrt ist ein über den Beeinflussungsterm berücksichtigter Anteil der Belohnung umso kleiner, je größer ein Einfluss auf die anderen Verkehrsteilnehmer für eine betrachtete Trajektorie bzw. eine betrachtete Aktion ist. Die Beziehung ist daher insbesondere entgegengesetzt proportional. Eine Aktion kann hierbei die gesamte Trajektorie umfassen oder nur einen Teil der Trajektorie, beispielsweise einen Weg zu der nächstliegenden Position von mehreren Positionen auf der Trajektorie. Im letzteren Fall bilden mehrere hintereinander ausgeführte Aktionen dann eine Trajektorie.

In einer Ausführungsform ist vorgesehen, dass das Verfahren des Reinforcement Learning als Multi-Agent Reinforcement Learning ausgestaltet ist.

In einer Ausführungsform ist vorgesehen, dass zumindest ein Teil des Verfahrens des Reinforcement Learning auf einem Backendserver ausgeführt wird, wobei eine hierdurch bestimmte Belohnungsfunktion an das Fahrzeug übermittelt wird und dort beim Bestimmen der optimalen Trajektorie verwendet wird. Hierdurch kann beispielsweise zumindest ein initiales bzw. erstes Training auf einem leistungsstarken Backendserver ausgeführt werden. Hierbei kann auch vorgesehen sein, dass das initiale bzw. erste Training zumindest teilweise mittels einer Simulation, das heißt mittels eines simulierten Umfeldes, durchgeführt wird, wodurch Kosten und Aufwand eingespart werden können.

In einer Ausführungsform ist vorgesehen, dass mehrere unterschiedliche Verkehrsteilnehmerarten der anderen Verkehrsteilnehmer unterschieden werden, wobei ein durch das Verhalten des Fahrzeugs auf die anderen Verkehrsteilnehmer ausgeübter Einfluss jeweils in Abhängigkeit der Verkehrsteilnehmerart des betrachteten anderen Verkehrsteilnehmers berücksichtigt wird. Hierdurch kann ein differenzierteres Verhalten gegenüber unterschiedlichen anderen Verkehrsteilnehmern und daher eine unterschiedliche Art der Kooperation des Fahrzeugs mit den anderen Verkehrsteilnehmern erfolgen. Die unterschiedlichen Verkehrsteilnehmerarten können beispielsweise eine oder mehrere der folgenden umfassen: Personenkraftwagen, Lastkraftwagen, Radfahrer oder Fußgänger. Es kann beispielsweise vorgesehen sein, dass im Umfeld erkannte Verkehrsteilnehmer mittels einer Klassifizierungseinrichtung nach Verkehrsteilnehmerarten klassifiziert werden und die jeweils erkannte Verkehrsteilnehmerart dem jeweiligen anderen Verkehrsteilnehmer im Umfeld des Fahrzeugs zugeordnet wird, sodass bei einer Weiterverarbeitung, insbesondere beim Schätzen eines Verhaltens, das heißt insbesondere einer oder mehrerer Trajektorien, der anderen Verkehrsteilnehmer darauf zurückgegriffen werden kann.

In einer Ausführungsform ist vorgesehen, dass mehrere unterschiedliche Verkehrsteilnehmerarten der anderen Verkehrsteilnehmer unterschieden werden, wobei jeweils verkehrsteilnehmerabhängige Beeinflussungsterme in der Belohnungsfunktion verwendet werden. Hierdurch lassen sich Belohnungen für unterschiedliche Verkehrsteilnehmerarten beispielsweise unterschiedlich stark gewichten und/oder ein Einfluss auf die Belohnung jeweils verkehrsteilnehmerartabhängig individuell berücksichtigen.

In einer Ausführungsform ist vorgesehen, dass mehrere unterschiedliche Verkehrsteilnehmerarten der anderen Verkehrsteilnehmer unterschieden werden, wobei jeweils verkehrsteilnehmerartabhängige Verkehrsteilnehmermodelle verwendet werden, um ein durch das Verhalten des Fahrzeugs auf die anderen Verkehrsteilnehmer ausgeübten Einfluss mittels der Schätzeinrichtung zu schätzen. Hierdurch kann das Verhalten der anderen Verkehrsteilnehmer in Abhängigkeit der Verkehrsteilnehmerart geschätzt werden, sodass das Verhalten und ein Einfluss hierauf differenzierter berücksichtigt werden kann.

In einer Ausführungsform ist vorgesehen, dass ein durch das Verhalten des Fahrzeugs auf die anderen Verkehrsteilnehmer ausgeübter Einfluss in Abhängigkeit des abgeleiteten Umfeldzustands festgelegt ist oder festgelegt wird. Hierdurch kann eine Ausprägung einer Kooperation mit anderen Verkehrsteilnehmern in Abhängigkeit eines aus den aktuell erfassten Sensordaten abgeleiteten Umfeldzustands des Fahrzeugs festgelegt werden.

Weitere Merkmale zur Ausgestaltung der Vorrichtung ergeben sich aus der Beschreibung von Ausgestaltungen des Verfahrens. Die Vorteile der Vorrichtung sind hierbei jeweils die gleichen wie bei den Ausgestaltungen des Verfahrens.

Weiter wird insbesondere auch ein Fahrzeug geschaffen, umfassend mindestens eine Vorrichtung gemäß einer der beschriebenen Ausführungsformen. Das Fahrzeug ist insbesondere ein Kraftfahrzeug. Prinzipiell kann das Fahrzeug jedoch auch ein anderes Land-, Luft-, Wasser-, Raum- oder Schienenfahrzeug sein.

Nachfolgend wird die Erfindung anhand bevorzugter Ausführungsbeispiele unter Bezugnahme auf die Figuren näher erläutert. Hierbei zeigen:
- Fig. 1: eine schematische Darstellung einer Ausführungsform der Vorrichtung zum Planen einer zukünftigen Trajektorie eines automatisiert oder teilautomatisiert fahrenden Fahrzeugs;
- Fig. 2: eine schematische Darstellung eines Multi-Agent Reinforcement Learning-Verfahrens zur Verdeutlichung einer Ausführungsform des Verfahrens.

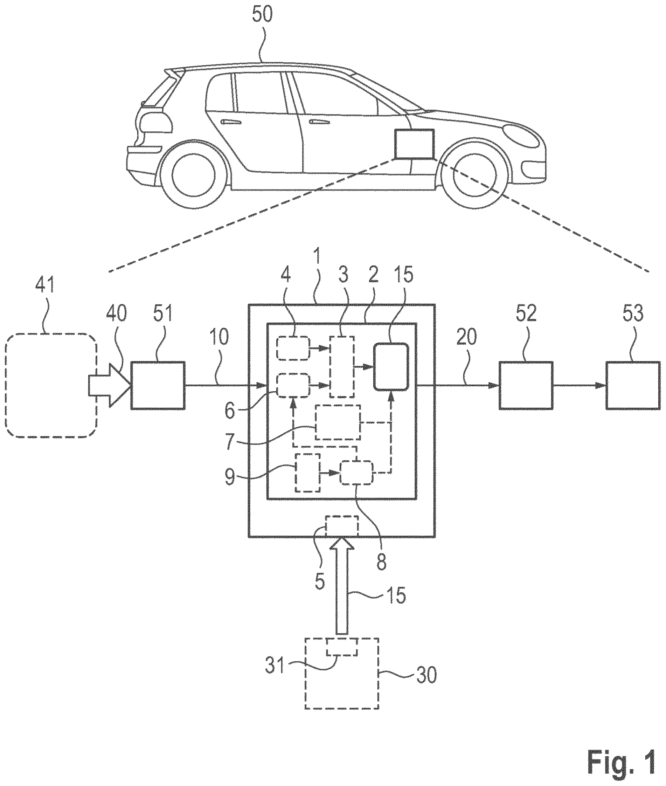

In Fig. 1 ist eine schematische Darstellung einer Ausführungsform der Vorrichtung 1 zum Planen einer zukünftigen Trajektorie eines automatisiert oder teilautomatisiert fahrenden Fahrzeugs 50 gezeigt. Die Vorrichtung 1 führt insbesondere das in dieser Offenbarung beschriebene Verfahren aus.

Die Vorrichtung 1 umfasst eine Trajektorienplanungseinrichtung 2. Die Trajektorienplanungseinrichtung 2 ist dazu eingerichtet, für einen Umfeldzustand 40, der aus mittels mindestens eines Sensors 51 des Fahrzeugs 50 erfassten Sensordaten 10 abgeleitet wurde, eine optimale Trajektorie 20 für das Fahrzeug 50 zu bestimmen. Der mindestens eine Sensor 51 kann beispielsweise eine Kamera, ein Lidarsensor, ein Radarsensor oder ein Ultraschallsensor etc. sein, der ein aktuelles Umfeld 41 des Fahrzeugs 50 erfasst. Die bestimmte optimale Trajektorie 20 wird anschließend zur Ausführung bereitgestellt und hierzu insbesondere einer Steuereinrichtung 52 des Fahrzeugs 50 zugeführt, die eine Aktorik 53 des Fahrzeugs 50 steuert, sodass die optimale Trajektorie 20 ausgeführt wird.

Das Verfahren wird insbesondere zyklisch wiederholt, sodass stets eine aktuelle optimale Trajektorie 20 bereitgestellt werden kann.

Teile der Vorrichtung 1, insbesondere die Trajektorienplanungseinrichtung 2, können einzeln oder zusammengefasst als eine Kombination von Hardware und Software ausgebildet sein, beispielsweise als Programmcode, der auf einem Mikrocontroller oder Mikroprozessor ausgeführt wird.

Zum Bestimmen der optimalen Trajektorie 20 erzeugt die Trajektorienplanungseinrichtung 2 mögliche zukünftige Trajektorien des Fahrzeugs 50 im Umfeld und bewertet die erzeugten möglichen zukünftigen Trajektorien mittels einer Belohnungsfunktion 15, wobei hierbei ein Verhalten des Fahrzeugs 50, ein statisches Umfeld und das Verhalten anderer Verkehrsteilnehmer berücksichtigt wird.

Zusätzlich wird in der Belohnungsfunktion 15 auch ein durch das Verhalten des Fahrzeugs 50 auf die anderen Verkehrsteilnehmer ausgeübter Einfluss berücksichtigt.

Hierbei ist insbesondere vorgesehen, dass ein kooperatives Verhalten mit anderen Verkehrsteilnehmern belohnt wird und ein nicht kooperatives Verhalten bestraft wird. Das Belohnen und Bestrafen erfolgt mittels einer entsprechend ausgestalteten Belohnungsfunktion 15.

Es kann vorgesehen sein, dass die Vorrichtung 1, insbesondere die Trajektorienplanungseinrichtung 2, eine Schätzeinrichtung 3 umfasst. Es ist dann vorgesehen, dass ein durch das Verhalten des Fahrzeugs 50 auf die anderen Verkehrsteilnehmer ausgeübter Einfluss mittels der Schätzeinrichtung 3 geschätzt wird, wobei hierzu mögliche Trajektorien der anderen Verkehrsteilnehmer in Abhängigkeit der möglichen zukünftigen Trajektorien des Fahrzeugs 50 jeweils mittels mindestens eines Verkehrsteilnehmermodells 4 geschätzt und bewertet werden. Der Einfluss wird dann in der Belohnungsfunktion 15 berücksichtigt.

Es kann vorgesehen sein, dass die optimale Trajektorie 20 mittels eines Verfahrens des Reinforcement Learning bestimmt wird, wobei die hierbei verwendete Belohnungsfunktion 15 einen Beeinflussungsterm aufweist, der einen Einfluss von Aktionen des Fahrzeugs 50 auf Aktionen der anderen Verkehrsteilnehmer beschreibt.

Weiterbildend kann vorgesehen sein, dass das Verfahren des Reinforcement Learning als Multi-Agent Reinforcement Learning ausgestaltet ist.

Es kann vorgesehen sein, dass zumindest ein Teil des Verfahrens des Reinforcement Learning auf einem Backendserver 30 ausgeführt wird, wobei eine hierdurch bestimmte Belohnungsfunktion 15 an das Fahrzeug 50 übermittelt wird und dort beim Bestimmen der optimalen Trajektorie 20 verwendet wird. Die bestimmte Belohnungsfunktion 15 wird beispielsweise über Kommunikationsschnittstellen 5, 31 der Vorrichtung 1 und des Backendservers 30 übermittelt.

Es kann vorgesehen sein, dass mehrere unterschiedliche Verkehrsteilnehmerarten 8 der anderen Verkehrsteilnehmer unterschieden werden, wobei ein durch das Verhalten des Fahrzeugs 50 auf die anderen Verkehrsteilnehmer ausgeübter Einfluss jeweils in Abhängigkeit der Verkehrsteilnehmerart 8 des betrachteten anderen Verkehrsteilnehmers berücksichtigt wird. Zum Bestimmen der Verkehrsteilnehmerart 8 kann beispielsweise eine Klassifizierungseinrichtung 9 vorgesehen sein, die andere Verkehrsteilnehmer im Umfeld 40 des Fahrzeugs 50 auf Grundlage des Umfeldzustands 40 bzw. der erfassten Sensordaten 10 klassifiziert, beispielsweise nach den folgenden Verkehrsteilnehmerarten 9: Personenkraftwagen, Lastkraftwagen, Radfahrer, Fußgänger (Erwachsener), Fußgänger (Kind) etc. Die bestimmte Verkehrsteilnehmerart 8 wird ebenfalls in der Belohnungsfunktion 15 berücksichtigt.

Es kann insbesondere vorgesehen sein, dass jeweils verkehrsteilnehmerabhängige Beeinflussungsterme in der Belohnungsfunktion 15 verwendet werden. Beispielsweise können Koeffizienten in dem Beeinflussungsterm in Abhängigkeit der für einen anderen Verkehrsteilnehmer im Umfeld bestimmten Verkehrsteilnehmerart 8 gewählt und/oder angepasst werden.

Es kann vorgesehen sein, dass jeweils verkehrsteilnehmerartabhängige Verkehrsteilnehmermodelle 6 verwendet werden, um ein durch das Verhalten des Fahrzeugs 50 auf die anderen Verkehrsteilnehmer ausgeübten Einfluss mittels der Schätzeinrichtung 3 zu schätzen.

Es kann vorgesehen sein, dass ein durch das Verhalten des Fahrzeugs 50 auf die anderen Verkehrsteilnehmer ausgeübter Einfluss in Abhängigkeit des abgeleiteten Umfeldzustands 40 festgelegt ist oder festgelegt wird.

Es ist vorgesehen, dass die Vorrichtung 1 eine Situationserkennungseinrichtung 7 aufweist. Mittels der Situationserkennungseinrichtung 7 wird mindestens eine Situation in dem abgeleiteten Umfeldzustand 40 und/oder in den erfassten Sensordaten 10 erkannt und ein durch das Verhalten des Fahrzeugs 50 auf die anderen Verkehrsteilnehmer ausgeübter Einfluss in Abhängigkeit der mindestens einen erkannten Situation festgelegt. Hierdurch kann eine Stärke der Kooperation in Abhängigkeit einer erkannten Situation (z.B. Einfädeln vor einer Baustelle, Spurwechsel in der Stadt, Passieren des Gegenverkehrs an Straßenverengungen etc.).

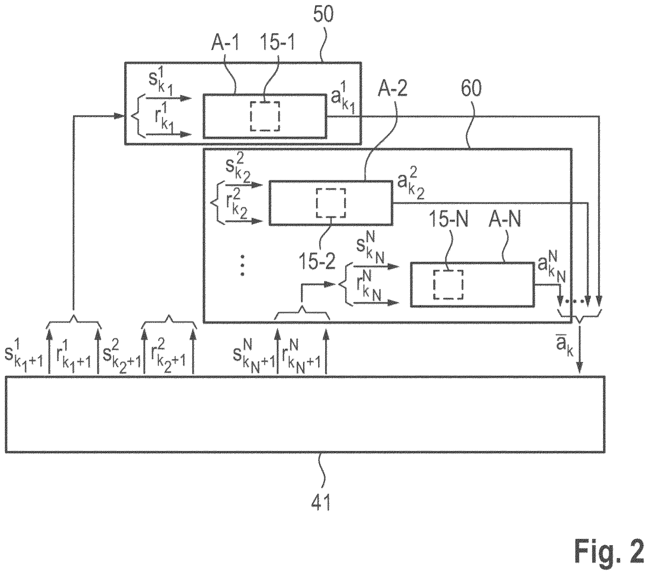

In Fig. 2 ist eine schematische Darstellung eines Multi-Agent Reinforcement Learning-Verfahrens zur Verdeutlichung einer Ausführungsform des Verfahrens gezeigt.

Beim Multi-Agent Reinforcement Learning (auch als bestärkendes oder verstärkendes Lernen bezeichnet) erlernen mehrere Agenten A-x selbständig eine Strategie, um erhaltene Belohnungen r^{x}ₖₓ zu maximieren (wobei x ein bis N laufender Index für die Agenten ist und kx einen jeweils betrachteten Zeitschritt für einen Agenten x bezeichnet, mit z.B. kx = 0, 1, 2,...). Eine Belohnung kann hierbei sowohl positiv als auch negativ sein. Anhand der erhaltenen Belohnungen approximiert der Agent A-x (jeweils) eine Belohnungsfunktion 15-x, die beschreibt, welchen Wert ein Zustand s^{x}ₖₓ oder eine Aktion a^{x}ₖₓ hat. Im Zusammenhang mit Aktionen kann ein solcher Wert auch als Aktionswert (engl. action value) bezeichnet werden.

Verfahren des Reinforcement Learning betrachten insbesondere eine Interaktion des Agenten A-x mit einem Umfeld 41 bzw. einer Umwelt, das bzw. die in Form eines Markow-Entscheidungsproblems (engl. Markov Decision Problem, MDP) formuliert ist. Der Agent A-x kann ausgehend von einem zu einem Zeitschritt kx gegebenen Zustand s^{x}ₖₓ durch eine aus mehreren Aktionen ausgewählten Aktion a^{x}ₖₓ in einen anderen Zustand s^{x}ₖₓ₊₁ gelangen. In Abhängigkeit der getroffenen Entscheidung, d.h. der ausgeführten Aktion a^{x}ₖₓ, erhält der Agent A-x eine Belohnung r^{x}ₖₓ (engl. reward). Jeder Agent A-x hat hierbei insbesondere die Aufgabe, einen zukünftig erwarteten Gewinn, der sich aus diskontierten Belohnungen r^{x}ₖₓ, also der Gesamtbelohnung zusammensetzt, zu maximieren. Am Ende des Verfahrens steht für eine vorgegebene Strategie (engl. policy) eine approximierte Belohnungsfunktion 15-x, mit der für jede Aktion a^{x}ₖₓ ein Belohnungswert r^{x}ₖₓ (bzw. Aktionswert) bereitgestellt oder geschätzt werden kann. Mittels der Belohnungsfunktion 15-x können insbesondere diejenigen Aktionen bestimmt werden, die die optimale Trajektorie bilden oder beinhalten.

Beim Multi-Agent Reinforcement Learning lernt jeder der mehreren Agenten A-x jeweils eine Belohnungsfunktion 15-x, wobei die Agenten A-x im selben Umfeld 41 ihre jeweiligen Aktionen a^{x}ₖₓ ausführen.

Das Fahrzeug 50 ist beispielsweise der Agent A-1, die anderen Verkehrsteilnehmer 60 sind beispielsweise die Agenten A-2 bis A-N, wobei auch vorgesehen sein kann, dass andere Verkehrsteilnehmer 60 selbst nicht mittels Reinforcement Learning ihre jeweils optimalen Trajektorien bestimmen bzw. anlernen. So können andere Verkehrsteilnehmer beispielsweise auch Fußgänger, Radfahrer und/oder manuell gesteuerte Fahrzeuge sein. Diese werden dann insbesondere als Teil des Umfelds 41 in den jeweiligen (Umfeld-)zuständen s^{x}ₖₓ berücksichtigt.

Die beim Multi-Agent Reinforcement Learning jeweils von den Agenten A-x verwendeten Belohnungsfunktionen 15-x weisen Beeinflussungsterme auf, die einen Einfluss von Aktionen a^{x}ₖₓ des Fahrzeugs 50 auf Aktionen a^{x}ₖₓ der anderen Verkehrsteilnehmer 60 beschreiben. Insbesondere ist hierbei eine mittels eines Beeinflussungsterms berücksichtigte positive Belohnung für eine Aktion a^{x}ₖₓ umso geringer, je größer ein durch die Aktion a^{x}ₖₓ hervorgerufener Einfluss auf die anderen Verkehrsteilnehmer 60 ist. Umgekehrt kann eine mittels des Beeinflussungsterms berücksichtigte positive Belohnung umso größer sein, je geringer ein durch die Aktion a^{x}ₖₓ hervorgerufener Einfluss auf die anderen Verkehrsteilnehmer 60 ist. Hierdurch kann ohne einen Austausch von geplanten Trajektorien ein kooperatives Verhalten gefördert werden.

Es kann vorgesehen sein, dass zumindest ein Teil des Verfahrens des Multi-Agent Reinforcement Learning auf einem Backendserver ausgeführt wird, wobei eine hierdurch bestimmte Belohnungsfunktion 15-x an das Fahrzeug 50 übermittelt wird und dort beim Bestimmen der optimalen Trajektorie verwendet wird. Auch den anderen Verkehrsteilnehmern 60 können auf dem Backendserver bestimmte Belohnungsfunktionen 15-x übermittelt werden.

### Bezugszeichenliste

- 1: Vorrichtung
- 2: Trajektorienplanungseinrichtung
- 3: Schätzeinrichtung
- 4: Verkehrsteilnehmermodell
- 5: Kommunikationsschnittstelle
- 6: Verkehrsteilnehmermodell
- 7: Situationserkennungseinrichtung
- 8: Verkehrsteilnehmerart
- 9: Klassifizierungseinrichtung
- 10: Sensordaten
- 15, 15-x: Belohnungsfunktion
- 20: optimale Trajektorie
- 30: Backendserver
- 31: Kommunikationsschnittstelle
- 40: Umfeldzustand
- 41: Umfeld
- 50: Fahrzeug
- 51: Sensor
- 52: Steuereinrichtung
- 53: Aktorik
- 60: anderer Verkehrsteilnehmer
- A-x: Agent
- s^{x}ₖₓ: (Umfeld-)Zustand des Agenten x im Zeitschritt kx
- a^{x}ₖₓ: Aktion des Agenten x im Zeitschritt kx
- r^{x}ₖₓ: Belohnung des Agenten x im Zeitschritt kx

## Patentansprüche

1. Verfahren zum Planen einer zukünftigen Trajektorie eines automatisiert oder teilautomatisiert fahrenden Fahrzeugs (50),
wobei Sensordaten (10) mittels mindestens eines Sensors (51) des Fahrzeugs (50) erfasst werden,
wobei mittels einer Trajektorienplanungseinrichtung (2) für einen aus den erfassten Sensordaten (10) abgeleiteten Umfeldzustand (40) eine optimale Trajektorie (20) für das Fahrzeug (50) bestimmt wird, wobei hierzu mögliche zukünftige Trajektorien des Fahrzeugs (50) erzeugt und mittels einer Belohnungsfunktion (15) bewertet werden, wobei hierbei ein Verhalten des Fahrzeugs (50), ein statisches Umfeld (40) und ein Verhalten anderer Verkehrsteilnehmer (60) berücksichtigt wird,
wobei in der Belohnungsfunktion (15) zusätzlich auch ein durch das Verhalten des Fahrzeugs (50) auf die anderen Verkehrsteilnehmer (60) ausgeübter Einfluss berücksichtigt wird, und
wobei die bestimmte optimale Trajektorie (20) zur Ausführung bereitgestellt wird,
wobei mittels einer Situationserkennungseinrichtung (7) mindestens eine Situation in dem abgeleiteten Umfeldzustand (40) und/oder in den erfassten Sensordaten (10) erkannt wird und ein durch das Verhalten des Fahrzeugs (50) auf die anderen Verkehrsteilnehmer (60) ausgeübter Einfluss in Abhängigkeit der mindestens einen erkannten Situation festgelegt ist oder festgelegt wird.

2. Verfahren nach Anspruch 1, **dadurch gekennzeichnet, dass** ein durch das Verhalten des Fahrzeugs (50) auf die anderen Verkehrsteilnehmer (60) ausgeübter Einfluss mittels einer Schätzeinrichtung (3) geschätzt wird, wobei hierzu mögliche Trajektorien der anderen Verkehrsteilnehmer (60) in Abhängigkeit der möglichen zukünftigen Trajektorien des Fahrzeugs (50) jeweils mittels mindestens eines Verkehrsteilnehmermodells (4) geschätzt und bewertet werden.

3. Verfahren nach Anspruch 1 oder 2, **dadurch gekennzeichnet, dass** die optimale Trajektorie (20) mittels eines Verfahrens des Reinforcement Learning bestimmt wird, wobei die hierbei verwendete Belohnungsfunktion (15) einen Beeinflussungsterm aufweist, der einen Einfluss von Aktionen (a^{x}ₖₓ) des Fahrzeugs (50) auf Aktionen (a^{x}ₖₓ) der anderen Verkehrsteilnehmer (60) beschreibt.

4. Verfahren nach Anspruch 3, **dadurch gekennzeichnet, dass** zumindest ein Teil des Verfahrens des Reinforcement Learning auf einem Backendserver (30) ausgeführt wird, wobei eine hierdurch bestimmte Belohnungsfunktion (15) an das Fahrzeug (50) übermittelt wird und dort beim Bestimmen der optimalen Trajektorie (20) verwendet wird.

5. Verfahren nach einem der vorangegangenen Ansprüche, **dadurch gekennzeichnet, dass** mehrere unterschiedliche Verkehrsteilnehmerarten (8) der anderen Verkehrsteilnehmer (60) unterschieden werden, wobei ein durch das Verhalten des Fahrzeugs (50) auf die anderen Verkehrsteilnehmer (60) ausgeübter Einfluss jeweils in Abhängigkeit der Verkehrsteilnehmerart (8) des betrachteten anderen Verkehrsteilnehmers (60) berücksichtigt wird.

6. Verfahren nach einem der vorangegangenen Ansprüche, **dadurch gekennzeichnet, dass** mehrere unterschiedliche Verkehrsteilnehmerarten (8) der anderen Verkehrsteilnehmer (60) unterschieden werden, wobei jeweils verkehrsteilnehmerartabhängige Verkehrsteilnehmermodelle (4) verwendet werden, um ein durch das Verhalten des Fahrzeugs (50) auf die anderen Verkehrsteilnehmer (60) ausgeübten Einfluss mittels der Schätzeinrichtung (3) zu schätzen.

7. Verfahren nach einem der vorangegangenen Ansprüche, **dadurch gekennzeichnet, dass** ein durch das Verhalten des Fahrzeugs (50) auf die anderen Verkehrsteilnehmer (60) ausgeübter Einfluss in Abhängigkeit des abgeleiteten Umfeldzustands (40) festgelegt ist oder festgelegt wird.

8. Vorrichtung (1) zum Planen einer zukünftigen Trajektorie eines automatisiert oder teilautomatisiert fahrenden Fahrzeugs (50), umfassend:
eine Trajektorienplanungseinrichtung (2), wobei die Trajektorienplanungseinrichtung (2) dazu eingerichtet ist, für einen Umfeldzustand (40), der aus mittels mindestens eines Sensors (51) des Fahrzeugs (50) erfassten Sensordaten (10) abgeleitet wurde, eine optimale Trajektorie (20) für das Fahrzeug (50) zu bestimmen, und hierzu mögliche zukünftige Trajektorien des Fahrzeugs (50) zu erzeugen und mittels einer Belohnungsfunktion (15) zu bewerten, wobei hierbei ein Verhalten des Fahrzeugs (50), ein statisches Umfeld und ein Verhalten anderer Verkehrsteilnehmer (60) berücksichtigt wird, wobei in der Belohnungsfunktion (15) zusätzlich auch ein durch das Verhalten des Fahrzeugs (50) auf die anderen Verkehrsteilnehmer (60) ausgeübter Einfluss berücksichtigt wird, und
die bestimmte optimale Trajektorie (20) zur Ausführung bereitzustellen,
und eine Situationserkennungseinrichtung (7), wobei die Situationserkennungseinrichtung dazu eingerichtet ist, mindestens eine Situation in dem abgeleiteten Umfeldzustand (40) und/oder in den erfassten Sensordaten (10) zu erkennen und einen durch das Verhalten des Fahrzeugs (50) auf die anderen Verkehrsteilnehmer (60) ausgeübten Einfluss in Abhängigkeit von der mindestens einen erkannten Situation festzulegen.

9. Fahrzeug (50), umfassend mindestens eine Vorrichtung (1) nach Anspruch 8.

## Claims

1. Method for planning a future trajectory of an automated or partially automated vehicle (50),
wherein sensor data (10) are captured by means of at least one sensor (51) of the vehicle (50),
wherein an optimal trajectory (20) for the vehicle (50) is determined by means of a trajectory planning device (2) for an environment state (40) derived from the captured sensor data (10), wherein, for this purpose, possible future trajectories of the vehicle (50) are generated and evaluated by means of a reward function (15), wherein a behavior of the vehicle (50), a static environment (40) and a behavior of other road users (60) are taken into account,
wherein the reward function (15) also takes into account an influence exerted by the behavior of the vehicle (50) on the other road users (60), and
wherein the determined optimal trajectory (20) is provided for execution, wherein at least one situation in the derived environment state (40) and/or in the captured sensor data (10) is recognized by means of a situation recognition device (7) and an influence exerted by the behavior of the vehicle (50) on the other road users (60) is established on the basis of the at least one recognized situation.

2. Method according to claim 1, **characterized in that** an influence exerted by the behavior of the vehicle (50) on the other road users (60) is estimated by means of an estimation device (3), wherein, for this purpose, possible trajectories of the other road users (60) are estimated and evaluated on the basis of the possible future trajectories of the vehicle (50) in each case by means of at least one road user model (4).

3. Method according to either claim 1 or 2, **characterized in that** the optimal trajectory (20) is determined by means of a reinforcement learning method, wherein the reward function (15) used here has an influencing term, which describes an influence of actions (a^{x}ₖₓ) of the vehicle (50) on actions (a^{x}ₖₓ) of the other road users (60).

4. Method according to claim 3, **characterized in that** at least part of the reinforcement learning method is executed on a backend server (30), wherein a reward function (15) determined thereby is transmitted to the vehicle (50) and is used there in determining the optimal trajectory (20).

5. Method according to any of the preceding claims, **characterized in that** a plurality of different road user types (8) of the other road users (60) are distinguished, wherein an influence exerted by the behavior of the vehicle (50) on the other road users (60) is taken into account in each case on the basis of the road user type (8) of the other road user (60) in question.

6. Method according to any of the preceding claims, **characterized in that** a plurality of different road user types (8) of the other road users (60) are distinguished, wherein road user models (4) based on the road user type are used in each case in order to estimate an influence exerted by the behavior of the vehicle (50) on the other road users (60) by means of the estimation device (3).

7. Method according to any of the preceding claims, **characterized in that** an influence exerted by the behavior of the vehicle (50) on the other road users (60) is established on the basis of the derived environment state (40).

8. Apparatus (1) for planning a future trajectory of an automated or partially automated vehicle (50), comprising:
a trajectory planning device (2), wherein the trajectory planning device (2) is designed to determine an optimal trajectory (20) for the vehicle (50) for an environment state (40) which was derived from sensor data (10) captured by means of at least one sensor (51) of the vehicle (50), and to generate possible future trajectories of the vehicle (50) for this purpose and to evaluate them by means of a reward function (15), wherein a behavior of the vehicle (50), a static environment and a behavior of other road users (60) are taken into account, wherein the reward function (15) also takes into account an influence exerted by the behavior of the vehicle (50) on the other road users (60), and
to provide the determined optimal trajectory (20) for execution, and a situation recognition device (7), wherein the situation recognition device is designed to recognize at least one situation in the derived environment state (40) and/or in the captured sensor data (10) and to establish an influence exerted by the behavior of the vehicle (50) on the other road users (60) on the basis of the at least one recognized situation.

9. Vehicle (50), comprising at least one apparatus (1) according to claim 8.

## Revendications

1. Procédé pour la planification d'une trajectoire future d'un véhicule (50) se déplaçant de manière automatisée ou semi-automatisée,
dans lequel des données de capteur (10) sont détectées au moyen d'au moins un capteur (51) du véhicule (50),
dans lequel une trajectoire optimale (20) pour le véhicule (50) est déterminée au moyen d'un appareil de planification de trajectoire (2) pour un état d'environnement (40) dérivé des données de capteur (10) détectées, dans lequel des trajectoires futures possibles du véhicule (50) sont générées et évaluées au moyen d'une fonction de récompense (15), dans lequel un comportement du véhicule (50), un environnement (40) statique et un comportement d'autres usagers de la route (60) sont pris en compte,
dans lequel une influence exercée par le comportement du véhicule (50) sur les autres usagers de la route (60) est également en outre prise en compte dans la fonction de récompense (15), et
dans lequel la trajectoire optimale (20) déterminée est mise à disposition pour l'exécution, dans lequel au moins une situation est reconnue au moyen d'un appareil de reconnaissance de situation (7) dans l'état d'environnement (40) dérivé et/ou dans les données de capteur (10) détectées et une influence exercée par le comportement du véhicule (50) sur les autres usagers de la route (60) est définie en fonction de l'au moins une situation reconnue.

2. Procédé selon la revendication 1, **caractérisé en ce qu'**une influence exercée par le comportement du véhicule (50) sur les autres usagers de la route (60) est estimée au moyen d'un appareil d'estimation (3), dans lequel des trajectoires possibles des autres usagers de la route (60) sont estimées et évaluées en fonction des trajectoires futures possibles du véhicule (50) respectivement au moyen d'au moins un modèle d'usagers de la route (4).

3. Procédé selon la revendication 1 ou 2, **caractérisé en ce que** la trajectoire optimale (20) est déterminée au moyen d'un procédé d'apprentissage par renforcement, dans lequel la fonction de récompense (15) utilisée présente un terme d'influence qui décrit une influence d'actions (a^{x}ₖₓ) du véhicule (50) sur des actions (a^{x}ₖₓ) des autres usagers de la route (60).

4. Procédé selon la revendication 3, **caractérisé en ce qu'**au moins une partie du procédé d'apprentissage par renforcement est exécutée sur un serveur dorsal (30), dans lequel une fonction de récompense (15) déterminée est transmise au véhicule (50) et y est utilisée lors de la détermination de la trajectoire optimale (20).

5. Procédé selon l'une des revendications précédentes,
**caractérisé en ce que** plusieurs types d'usagers de la route (8) différents parmi les autres usagers de la route (60) sont différenciés, dans lequel une influence exercée par le comportement du véhicule (50) sur les autres usagers de la route (60) est prise en compte respectivement en fonction du type d'usager de la route (8) de l'autre usager de la route (60) considéré.

6. Procédé selon l'une des revendications précédentes,
**caractérisé en ce que** plusieurs types d'usagers de la route (8) différents parmi les autres usagers de la route (60) sont différenciés, dans lequel des modèles d'usagers de la route (4) dépendant respectivement des types d'usagers de la route sont utilisés pour estimer une influence exercée par le comportement du véhicule (50) sur les autres usagers de la route (60) au moyen de l'appareil d'estimation (3).

7. Procédé selon l'une des revendications précédentes,
**caractérisé en ce qu'**une influence exercée par le comportement du véhicule (50) sur les autres usagers de la route (60) est définie en fonction de l'état d'environnement (40) dérivé.

8. Dispositif (1) pour la planification d'une trajectoire future d'un véhicule (50) se déplaçant de manière automatisée ou semi-automatisée, comprenant :
un appareil de planification de trajectoire (2), dans lequel l'appareil de planification de trajectoire (2) est configuré pour déterminer une trajectoire optimale (20) pour le véhicule (50) pour un état d'environnement (40) qui a été dérivé de données de capteur (10) détectées au moyen d'au moins un capteur (51) du véhicule (50), et pour générer des trajectoires futures possibles du véhicule (50) et les évaluer au moyen d'une fonction de récompense (15), dans lequel un comportement du véhicule (50), un environnement statique et un comportement d'autres usagers de la route (60) sont pris en compte, dans lequel une influence exercée par le comportement du véhicule (50) sur les autres usagers de la route (60) est également en outre prise en compte dans la fonction de récompense (15), et
pour mettre à disposition la trajectoire optimale (20) déterminée pour l'exécution, et un appareil de reconnaissance de situation (7), dans lequel l'appareil de reconnaissance de situation est configuré pour reconnaître au moins une situation dans l'état d'environnement (40) dérivé et/ou dans les données de capteur (10) détectées et pour définir une influence exercée par le comportement du véhicule (50) sur les autres usagers de la route (60) en fonction de l'au moins une situation reconnue.

9. Véhicule (50), comprenant au moins un dispositif (1) selon la revendication 8.
